# EUROPÄISCHE PATENTANMELDUNG

(11) **EP 1 930 925 A1**
(43) Veröffentlichungstag der Anmeldung: **11.06.2008**
(21) Anmeldenummer: 07022296.3
(22) Anmeldetag: 16.11.2007
(51) Int. Cl.: H01H 13/88, B29C 45/14, C25D 5/02, C25D 5/56, H01H 9/18, H01H 13/14

(54) **Verfahren zur partiellen Galvanisierung eines durch Spritzgiessen hergestellten Dekor- oder Funktionsbauteil**

(30) Priorität: 07.12.2006 DE 202006018515 U
(71) Anmelder: Albea Kunstofftechnik GmbH, 77960 Seelbach (DE)
(72) Erfinder: Dogan, Can-Kasim, 32139 Spenge (DE); Frattini, David, 77656 Offenburg (DE)
(74) Vertreter: Maucher, Wolfgang

(57) **Zusammenfassung**

Die Erfindung betrifft ein zwei- oder dreidimensionales Dekor- oder Funktionsbauteil, das zumindest bereichsweise eine galvanisierbare Kunststoffoberfläche als galvanisierfähige Basisschicht hat, welche galvanisierfähige Basisschicht in Teilbereichen abgetragen und/oder in Teilbereichen mit einer nicht-galvanisierfähigen Schicht maskiert ist, wobei die nicht-abgetragenen und/oder unmaskierten Teilbereiche der galvanisierfähigen Basisschicht eine galvanische Schicht tragen (vgl. Fig. 9)

## Beschreibung

Die Erfindung betrifft ein zwei- oder dreidimensionales Dekor- oder Funktionsbauteil.

Derartige Dekor- oder Funktionsbauteile sind in vielfältiger Form und für viele Anwendungen in unterschiedlichen Formen bekannt. Beispielsweise werden solche Dekor- und/oder Funktionsbauteile im Automobilinneren als Zierleisten, Tasten, Bedienelemente, Bedienungsknöpfe, Einstiegsleisten, ABC-Säulen und so weiter eingesetzt. Ferner sind derartige Dekor- und/oder Funktionsbauteile in der Hauswarentechnik als Dekorblenden, Bedienelemente, Dekorblenden für Halogenbeleuchtungen, Steckdosengehäuse und so weiter, sowie auch in anderen Industriezweigen vielfältig bekannt. Vor allem die Herstellung des Gehäuses und die Beschriftung sowie die Unterbringung der Beleuchtung verursacht dabei einen relativ hohen Herstellungs- und/oder Montageaufwand.

Es besteht deshalb die Aufgabe, ein Dekor- und/oder Funktionsbauteil der eingangs erwähnten Art zu schaffen, welches einen einfachen Aufbau hat und zu dessen Herstellung ein vom Aufwand möglichst einfaches Verfahren möglich ist.

Die erfindungsgemäße Lösung dieser Aufgabe besteht bei dem eingangs erwähnten Dekor- und/oder Funktionsbauteil in den Merkmalen des geltenden Patentanspruchs 1.

Das erfindungsgemäße Dekor- oder Funktionsbauteil weist zumindest bereichsweise eine galvanisierfähige Kunststoffoberfläche auf. Eine vor dem Galvanikprozess aufgebrachte leitende Schicht wird in Teilbereichen abgetragen und/oder eine galvanisierfähige Kunststoffoberfläche wird in Teilbereichen mit einer nicht-galvanisierfähigen Schicht maskiert und/oder die Anbringung einer galvanisierfähigen Kunststoffoberfläche wird durch eine solche, vor Aufbringung dieser Basisschicht vorgesehene Schicht verhindert, wobei die nicht-abgetragenen und/oder unmaskierten Teilbereiche der galvanisierfähigen Kunststoffoberfläche eine galvanische Schicht tragen. Somit ergibt sich ein Element der eingangs erwähnten Art, dessen Herstellungsverfahren einfach, preiswert und mit vergleichsweise wenig Ausschuss durchführbar ist. Das erfindungsgemäße Dekor- oder Funktionsbauteil weist an seiner Außenseite oder Oberfläche eine galvanisierfähige Kunststoffoberfläche auf, die beispielsweise zur Visualisierung von Ziermustern, Symbolen und/oder Schriftzeichen - wie oben genannt - mit einer partiellen galvanischen Schicht versehen werden.

Um Bedienelemente, Druckknöpfe oder andere Formbauteile auf einfache Weise herstellen zu können, sieht eine bevorzugte Ausführungsform gemäß der Erfindung vor, dass das Dekor- oder Funktionsbauteil als folienhinterspritztes oder foliertes Kunststoffteil ausgebildet ist.

Das erfindungsgemäße Dekor- oder Funktionsbauteil kann in verschiedenen Ausführungsformen angeboten werden. So sieht eine Ausführung gemäß der Erfindung vor, dass das Dekor- oder Funktionsbauteil aus einem galvanisierfähigen Trägermaterial hergestellt ist, das zumindest teil- oder bereichsweise eine als Maskierung aufgebrachte nicht-galvanisierbare Schicht und eine von der nicht-galvanisierbaren Schicht wenigstens bereichsweise umgrenzte galvanische Schicht trägt.

Eine demgegenüber andere Ausführungsform sieht vor, dass das Dekor- oder Funktionsbauteil aus einem nicht-galvanisierfähigen Trägermaterial hergestellt ist, auf das zumindest teil- oder bereichsweise eine galvanisierfähige Schicht aufgebracht ist, welche galvanisierfähige Schicht zumindest teil- oder bereichsweise eine als Maskierung aufgebrachte nicht-galvanisierbare Schicht und eine von der nicht-galvanisierbaren Schicht wenigstens bereichsweise umgrenzte galvanische Schicht trägt.

Dabei kann es bei den oben genannten Ausführungsformen vorteilhaft sein, wenn das Trägermaterial aus einer Folie hergestellt und/oder die Maskierung auf das Trägermaterial im Siebdruckverfahren aufgebracht ist.

Um auf das aus Kunststoff hergestellte Dekor- oder Funktionsbauteil auch eine Chromschicht oder dergleichen Metallschicht aufbringen zu können, ist es vorteilhaft, wenn unter der außenseitigen galvanischen Schicht eine galvanische Basisschicht auf das Dekor- oder Funktionsbauteil aufgebracht ist, die beispielsweise als Nickelschicht ausgebildet sein kann.

Um im erfindungsgemäßen Dekor- oder Funktionsbauteil Ziermuster, Symbole oder Schriftzeichen visualisieren zu können, kann es unter Umständen bereits ausreichend sein, die hinterspritzte Kunststofffolie und/oder die Basisschicht in Teilbereichen abzutragen.

Um derartige Ziermuster, Symbole oder Schriftzeichen besonders eindrucksvoll vortreten zu lassen, kann es vorteilhaft sein, wenn das Dekor- oder Funktionsbauteil zumindest in einem Teilbereich und insbesondere in einem an die galvanische Schicht angrenzenden Bereich transparent oder opak ausgebildet ist.

Dabei sieht eine bevorzugte Ausführungsform gemäß der Erfindung vor, dass dem Dekor- oder Funktionsbauteil eine Hintergrundbeleuchtung zugeordnet ist.

Besonders vorteilhaft ist es, wenn die galvanische Schicht als Ziermuster, Symbol, Hinweis, Schriftzeichen oder dergleichen ausgebildet ist oder ein solches Ziermuster, Symbol, Hinweis, Schriftzeichen oder dergleichen in negativer Form ausspart.

Nach einer Weiterbildung gemäß der Erfindung ist vorgesehen, dass das Dekor- oder Funktionsbauteil ein Gehäuse mit einem Innenraum hat, dass an einer Abschlusswand des Gehäuses die galvanische Schicht vorgesehen ist, dass die Abschlusswand wenigstens teil- oder bereichsweise durch eine Folie mit einer zumindest bereichsweise galvanisierfähigen Oberfläche gebildet ist, welche zumindest in einem Teilbereich die galvanische Schicht trägt, und dass die Folie zur Bildung des zumindest einen Ziermusters, Symboles, Hinweises, Schriftzeichens oder der gleichen von der galvanischen Schicht derart befreit ist, dass der die galvanische Schicht umgrenzende Bereich des Dekor- oder Funktionsbauteiles das zumindest eine Ziermuster, Symbol, Hinweis, Schriftzeichen oder dergleichen bildet oder in negativer Form ausspart. Dabei kann zunächst eine gegebenenfalls auch lichtdurchlässige oder transparente Folie aus galvanisierfähigem Material vorverformt oder plangelassen in ein Spritzgießwerkzeug eingelegt werden, wonach der den Gehäusekörper bildende Werkstoff eingespritzt wird und sich mit der Folie verbindet. Danach oder schon vorher kann die Folie an ihrer Außenseite oder Oberfläche maskiert oder ihre Basisschicht vorzugsweise derart abgetragen werden, dass Ziermuster, Symbole und/oder Schriftzeichen visualisiert werden, die von der galvanischen Schicht freigestellt oder befreit sind. Dabei kann die Basisschicht der Folie durch ein Laserverfahren verdampft oder dergleichen abgetragen werden.

Vor dem Anbringen von Ziermustern für Dekorelemente oder Symbole und/oder Schriftzeichen kann der Gehäusekörper zusammen mit der Folie entformt und danach in der beschriebenen Weise beschriftet oder dekoriert werden. Bei Bedarf kann anschließend eine Leuchtquelle oder ein Leuchtkörper als Hintergrundbeleuchtung eingesetzt und der Gehäusekörper über das Leuchtmittel gestülpt und beispielsweise an dem Träger des Leuchtmittels befestigt werden.

Zweckmäßig kann es sein, wenn der Gehäusekörper nach seinem Herstellen und Verbinden mit der Folie durch Spritzgießen hülsen- oder ringförmig ausgebildet ist. Es ist also zweckmäßig, bei der Herstellung des Gehäusekörpers zum Verbinden mit der schon eingelegten Folie eine entsprechende Spritzgießform zu wählen.

Der Gehäusekörper kann aber auch einen länglichen, vieleckigen oder runden, insbesondere kreisrunden Querschnitt haben und die Form einer von der Folie nach der Verbindung mit dem Gehäusekörper überdeckten Öffnung kann mit dem Querschnitt des von dem Gehäusekörper umschlossenen Innenraums übereinstimmen. Beispielsweise kann also der Innenraum des Gehäusekörpers bei dessen Spritzgießen und Verbinden mit der Folie von einem Kern freigehalten werden, der bis zu der eingelegten Folie reicht, so dass die Bildung des Innenraums des Gehäuses gleichzeitig auch zur Bildung der von der Folie überdeckten Öffnung führt. Dadurch kann eine Flexibilität erreicht werden, welche zum Beispiel die Funktion einer Folientastatur erlaubt.

Besonders einfach wird der Gehäusekörper selbst und auch seine Herstellung insbesondere durch Spritzgießen, wodurch gleichzeitig die Verbindung mit der die Abschlusswand bildenden Folie erfolgt, wenn der von dem Gehäusekörper umschlossene Innenraum sich bis zu der Öffnung und zu der diese abschließenden Folie vorsprungfrei und stetig fortsetzt. Er könnte auch eine sich zu der Folie hin verjüngende oder enger werdende Innenform haben, vor allem dann, wenn auch die Außenseite des Elements eine etwas sich verjüngende oder konische Form haben soll. Auch in einem solchen Fall kann der Innenraum vorsprungfrei und stetig verlaufend begrenzt sein, jedoch könnte auch eine stufenweise Verengung des Querschnitts in Richtung zu der Folie hin vorgesehen werden. Ein weiterer Vorteil liegt in der Möglichkeit, zum Beispiel Rasthaken oder Schraubdome von einer Galvanisierung freizuhalten, um eine Versprödung durch diese zu vermeiden.

Die Folie kann in dem von dem Rand der Öffnung umgrenzten Bereich plan oder eben sein und den mit ihr durch Spritzgießen verbundenen Öffnungsrand des Gehäusekörpers an dessen gesamtem Umfang überdecken. Dabei ist es günstig, wenn die Folie ausgestanzt wird, bevor sie in die Spritzgießform eingelegt wird.

Die Folie kann im Bereich ihres Randes verformt, insbesondere räumlich gekrümmt sein, und der durch Spritzgießen mit ihr verbundene Gehäusekörper kann eine von der Folie überdeckte abgeschrägte oder abgerundete Stirnseite haben, in welcher die von der Folie verschlossene Öffnung angeordnet ist. In einem solchen Falle kann die Folie auch zunächst vorverformt und dann in die Spritzgießform, die eine entsprechende negative Form hat, eingelegt und danach mit dem Gehäusekörper durch Spritzgießen verbunden werden.

Dabei kann die Folie auch wenigstens einen Teil der von der Stirnseite abgehenden Seitenfläche des Gehäusekörpers außenseitig überdecken und durch Spritzgießen damit verbunden sein. Dies kann dadurch erreicht werden, dass die vorgeformte, beispielsweise vakuum- und/oder druckgeformte oder tiefgezogene Folie nach dem Ausstanzen eine entsprechende Form hat, die beispielsweise eine napfförmige oder sonst wie dreidimensionale Form sein kann, die in die Spritzgießform eingelegt und danach teilweise oder komplett mit dem Werkstoff des Gehäusekörpers ausgefüllt und hinterspritzt wird.

Eine weitere besondere vorteilhafte und zweckmäßige Ausgestaltung der Erfindung kann vorsehen, dass im Inneren des Gehäusekörpers an der Innen- oder Unterseite der Folie eine lichtdurchlässige Stützwandung aus spritzgießfähigem Werkstoff vorgesehen ist, die mit der Innen- oder Unterseite der Folie durch Spritzgießen verbunden ist. Auf diese Weise erhält das Element eine größere Stabilität, kann also vor allem auch gut als Bedienelement eingesetzt werden, welches beispielsweise im Bereich der Folie einer Druckkraft ausgesetzt werden kann. Dabei ist es möglich, innerhalb der Spritzgießform, in welcher die Folie mit dem Gehäusekörper durch Spritzgießen verbunden wird, auch eine zweite oder auch beliebig viele Kunststoffkomponenten einzuspritzen, die den von dem Gehäusekörper freigelassen Teil der Folie überdeckt. Denkbar ist aber auch ein mehrstufiges Verfahren, bei welchem zunächst in einem Werkzeug die Folie mit dem Gehäusekörper hinterspritzt wird, wonach das dadurch gebildete Zwischenprodukt in einem weiteren Schritt gegebenenfalls in einem anderen Werkzeug mit dem die transparente oder beliebig farbige Stützwand bildenden Kunststoff hinterspritzt wird.

Die Dicke der Stützwand kann etwa der Querschnittsdicke der Wandung des Gehäusekörpers entsprechen, aber auch dicker oder dünner oder rückseitig unterschiedlich strukturiert sein, so dass eine stabile Form des Elements erzielt wird.

Wie bereits erwähnt, kann die Folie vor dem Verbinden mit dem Gehäusekörper vorverformt, beispielsweise druckgeformt, vakuumgeformt oder tiefgezogen oder plangelassen und insbesondere ausgestanzt werden, um sie danach in die Spritzgießform einzulegen.

Als Werkstoff für die metallisierte oder metallisierbare Folie kann ABS vorgesehen sein und die Dicke der Wandung des Gehäusekörpers und/oder der Stützwand kann die der Folie mehrfach übertreffen. Die Folie trägt also praktisch eine Beschriftung oder Symbole oder Dekorelemente oder Ziermuster, wird aber durch den Gehäusekörper und die Stützwand so gehalten, dass sie selbst auch bei Belastungen des Elements, beispielsweise eines Bedienungselements, selbst nicht Verformungs- oder Zerstörungskräften ausgesetzt ist.

Als Werkstoff für den Gehäusekörper ist zweckmäßigerweise spritzgießfähiger, undurchsichtiger, insbesondere nicht metallisierbarer Kunststoff vorgesehen. Somit kann die Metallisierung der Folie auch nach dem Verbinden mit dem Gehäusekörper durch Spritzgießen erfolgen. Gleichzeitig wird durch die Undurchsichtigkeit des Werkstoff des Gehäusekörpers erreicht, dass das Licht der Leuchtquelle zu einer eventuell unter dieser oder hinter dieser angeordneten Stützwand gelenkt wird und nicht ein Teil der Leuchtkraft verloren geht.

Als Werkstoff für die Stützwandung kann spritzgießfähiger, transparenter oder durchsichtiger, insbesondere nicht metallisierbarer Kunststoff vorgesehen sein. Somit gelangt das Licht der Leuchtquelle durch die Stützwandung zu der Folie und kann dort angeordnete Zierelemente, Symbole oder Beschriftungen entsprechend durchleuchten oder durch Beleuchtung sichtbar machen.

Vor allem bei Kombination einzelner oder mehrerer der vorbeschriebenen Merkmale und Maßnahmen ergibt sich ein Dekor- und/oder Bedienelement, dessen Herstellungsverfahren einfach ist, weil vor allem die die Symbole und dergleichen tragende Folie mit einem Gehäusekörper durch Spritzgießen verbunden werden kann, wobei der zu metallisierende Bereich der Folie durch eine entsprechende Folientechnik geformt oder auch plan gelassen werden kann, während in den übrigen Bereichen dieses Elements, insbesondere an dem Gehäusekörper Kunststoffmaterial eingesetzt werden kann, welches bei einer Galvanisierung keine Metallschicht aufbaut oder annimmt. Die Metallisierung kann also erfolgen, wenn die Folie durch Spritzgießen mit dem Gehäusekörper und/oder der Stützwand in einer Spritzgießform verbunden und aus der Spritzgießform entnommen worden ist. Nach der Metallisierung durch zum Beispiel einen Galvanisierungsprozess kann dann an der Folie das entsprechende Muster oder Symbol oder eine Schrift oder dergleichen durch Abtragen der Basisschicht beispielsweise mittels eines Laserverfahrens angebracht werden. Anschließend wird die Hauptmetallisierung durchgeführt.

Nachstehend sind Ausführungsbeispiele der Erfindung anhand der Zeichnung näher beschrieben. Es zeigt in schematisierter Darstellung:
- Fig. 1: ein Dekor- oder Funktionsbauteil, bei dem auf die unmaskierten Teilbereiche eines galvanisierfähigen Trägermaterials eine galvanische Chrom- oder dergleichen Metallschicht aufgebracht ist,
- Fig. 2: ein Dekor- oder Funktionsbauteil, bei dem auf ein nicht-galvanisierfähiges Trägermaterial eine galvanisierfähige Schicht aufgebracht ist, wobei diese galvanisierfähige Kunststoffoberfläche in ihren unmaskierten Teilbereichen eine galvanische Schicht trägt,
- Fig. 3 bis 5: die zur Herstellung eines folienhinterspritzten Kunststoffteiles gewählten Verfahrensschritte, wobei das folienhinterspritzte Kunststoffteil in ihren unmaskierten Teilbereichen eine galvanische Schicht trägt, während demgegenüber die beispielsweise als Symbol ausgestalteten maskierten Teilbereiche offen bleiben,
- Fig. 6 bis 8: die zur Herstellung eines anderen folienhinterspritzten Kunststoffteiles verwendeten Verfahrensschritte, wobei das folienhinterspritzte Kunststoffteil eine galvanische Basisschicht (zum Beispiel eine Nickelschicht) trägt, die in Teilbereichen abgelasert oder dergleichen abgetragen ist, um anschließend nur in den nicht-abgetragenen Teilbereichen des folienhinterspritzten Kunststoffteiles eine galvanische Schicht aufzubringen,
- Fig. 9: einen Schnitt durch eine Durchmesserebene eines im Querschnitt runden Dekor- und/oder Funktionsbauteiles mit einem Gehäuse und einer darin angeordneten Lichtquelle, die eine Abschlusswand mit einer Folie und auf dieser angeordnete Symbole durchleuchtet,
- Fig. 10: in vergrößertem Maßstab die in Fig. 8 mit E1 gekennzeichnete Einzeleinheit, insbesondere die mit einem Gehäusekörper und einer Stützwand durch Spritzgießen verbundene und an ihrer Außenseite metallisierte Folie, die im Bereich von Hinweisen, Mustern oder Schriftzeichen von ihrer Metallisierung befreit ist,
- Fig. 11: eine der Fig. 8 entsprechende Darstellung, bei welcher die Folie nur die Öffnung eines Gehäusekörpers, nicht aber dessen Seitenwand übergreift,
- Fig. 12: in vergrößertem Maßstab die in Fig. 10 mit E2 gekennzeichnete Einzelheit und
- Fig. 13: in verkleinertem Maßstab eine Draufsicht des erfindungsgemäßen Dekor- und/oder Funktionsbauteiles, wobei die Metallschicht an der Folie bereichsweise so entfernt ist, dass die Buchstaben ON ausgespart sind.

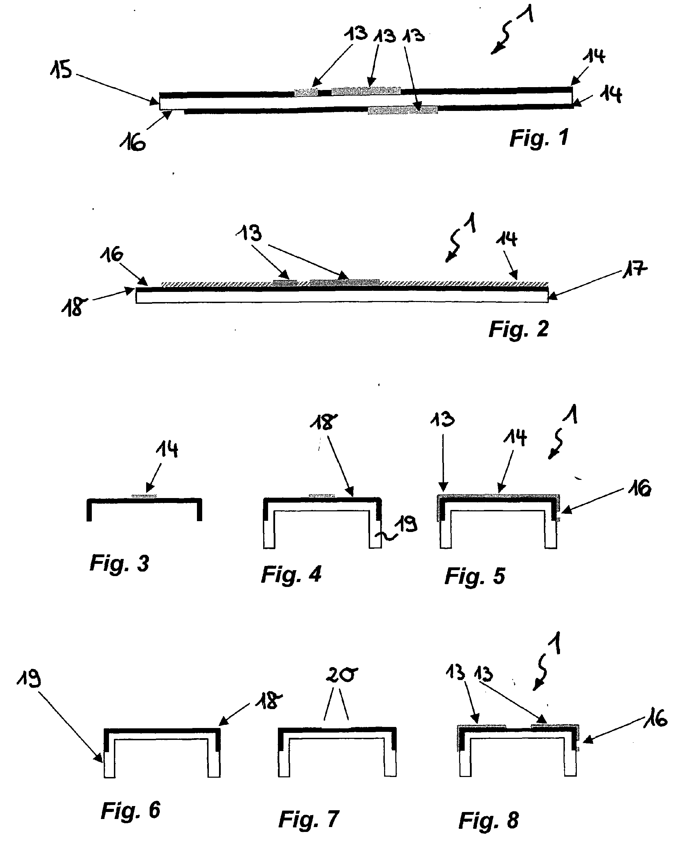

In den Fig. 1 bis 8 sind verschiedene Ausführungen eines im Ganzen mit 1 bezeichneten und in beliebiger Geometrie herstellbaren Dekor- oder Funktionsbauteiles dargestellt, wobei die in unterschiedlichen Verfahrensschritten hergestellten Dekor- oder Funktionsbauteile 1 eine galvanische Schicht 13 tragen, die beispielsweise ein Symbol, Schriftzeichen oder dergleichen Muster darstellt oder in negativer Form umgrenzt.

Die hier gezeigten Dekor- oder Funktionsbauteile 1 weisen dazu zumindest bereichsweise eine galvanisierfähige Kunststoffoberfläche auf, die in Teilbereichen mit einer nicht-galvanisierfähigen Schicht 14 maskiert ist, wobei auf die unmaskierten Teilbereiche die galvanische Schicht 13 aufgebracht ist. In Fig. 1 ist ein Dekor- oder Funktionsbauteil 1 dargestellt, das eine beispielsweise auch als Folie hergestellte galvanisierfähige Trägerschicht 15 hat, die eine gleichbleibende oder auch unterschiedliche Dicke aufweisen und zwei- oder dreidimensional geformt sein kann. Auf diese Trägerschicht 15 aus galvanisierfähigem Material ist in Teilbereichen eine nicht-galvanisierbare Schicht 14 als Maskierung beispielsweise im Siebdruckverfahren aufgebracht, wobei diese Maskierung in unterschiedlicher Farbgebung und/oder Oberflächenstruktur aufgebracht sein kann. Auf die von dieser Maskierung freigehaltenen unmaskierten Teilbereiche der Trägerschicht 15 wird eine Chrom- oder eine andere galvanische Schicht 13 aufgebracht, welche beispielsweise Ziermuster, Symbole und/oder Schriftzeichen bilden oder in negativer Form aussparen kann. Um den Galvanisiervorgang zu erleichtern, ist an einer in Gebrauchsstellung nicht sichtbaren oder sonst wie nicht relevanten Stelle, insbesondere im Umfangsrandbereich des Dekor- und/oder Funktionsbauteiles 1, eine Kontaktfläche 16 freigehalten, mit der das galvanisierfähige Trägermaterial 13 kontaktiert werden kann.

In Fig. 2 ist ein Dekor- oder Funktionsbauteil 1 dargestellt, das ein nicht-galvanisierbares Trägermaterial 17 hat, welches in zwei- oder dreidimensionaler Form mit gleichbleibender oder unterschiedlicher Dicke zum Bespiel aus Folie hergestellt werden kann. Auf dieses nicht-galvanisierbare Trägermaterial 17 ist eine galvanisierfähige Schicht 18, beispielsweise als weitere Folie oder auch als Lackschicht aufgebracht, um dem Trägermaterial 17 eine galvanisierfähige Kunststoffoberfläche zu geben. Auf diese galvanisierfähige Oberfläche wird nun wiederum in Teilbereichen eine nicht-galvanisierbare Schicht 14 als Maskierung, zum Beispiel im Siebdruckverfahren oder auch als Kaschierung, aufgebracht. Dabei kann die Dicke oder auch farbige Ausgestaltung dieser Maskierung 14 beliebig sein. Um den Galvanisiervorgang zu erleichtern, ist auch hier an einer in Gebrauchsstellung nicht sichtbaren oder sonst wie nicht relevanten Stelle eine Kontaktfläche 16 freigehalten, mit der die galvanisierfähige Kunststoffoberfläche kontaktiert werden kann.

In den Fig. 3 bis 5 sind die einzelnen Verfahrensschritte zur Herstellung eines Dekor- oder Funktionsbauteiles 1 dargestellt, welches Dekor- oder Funktionsbauteil 1 als folienhinterspritztes Kunststoffteil ausgebildet ist. Dazu wird auf eine gegebenenfalls auch vorgeformte und/oder ausgestanzte Folie 18 aus ABS oder einem anderem galvanisierfähigen Kunststoff eine nicht-galvanisierbare Schicht 14 aufgebracht, die beispielsweise ein buntes Logo oder dergleichen Symbol oder Schriftzeichen darstellen kann. Diese Folie 18 wird anschließend mit einem gegebenenfalls auch nicht-galvanisierbaren Kunststoff 19 hinterspritzt, so dass nach Aufbringen der galvanischen Schicht 13 diese die als Logo oder dergleichen ausgebildete Schicht 14 umgrenzt.

In den Fig. 6 bis 8 sind die Verfahrensschritte eines weiteren Dekor- oder Funktionsbauteiles 1 gezeigt, dass ebenfalls als folienhinterspritztes Kunststoffteil ausgebildet ist. Dabei wird eine galvanisierfähige oder galvanisierfähig beschichtete Folie 18 mit einem nicht-galvanisierbaren Spritzgussgranulat 19 zu einem Ein-Komponenten- oder Mehr-Komponenten-Spritzgussteil hinterspritzt, wobei dieses Spritzgussgranulat aus PC oder einem anderen Kunststoff besteht und bei Bedarf bunt eingefärbt, opak ausgestaltet oder zum Zwecke der Hintergrundbeleuchtung transparent sein kann. Auf dieses folienhinterspritzte Kunststoffteil 1 ist eine galvanische Basisschicht, zum Beispiel aus Nickel, aufgebracht oder aufgetragen. Aus dieser galvanischen Basisschicht wird anschließend ein Teilbereich 20 der galvanisierungsfähigen Oberfläche ausgelasert oder dergleichen abgetragen (vgl. Fig. 7), um wiederum nur in den nicht-abgetragenen Teilbereichen eine galvanische Deckschicht 13 aufbringen zu können.

Auch bei den in den Fig. 3 bis 5 beziehungsweise 6 bis 8 dargestellten Dekor- und/oder Funktionsbauteilen ist in einem in Gebrauchsstellung nicht sichtbaren oder sonst wie unrelevanten Bereich eine Kontaktfläche 16 freigehalten, mit der die galvanisierfähige Kunststoffoberfläche kontaktiert werden kann.

Auf die galvanisierfähigen Kunststoffoberflächen der hier gezeigten Dekor- und/oder Funktionsbauteile wird zumindest in Teilbereichen eine Basisschicht aufgebracht. Diese zum Beispiel aus Nickel hergestellte galvanische Basisschicht ist nur in den unmaskierten Teilbereichen der galvanisierfähigen Kunststoffoberfläche vorgesehen oder die galvanisierfähige Kunststoffoberfläche beziehungsweise die galvanische Basisschicht wird freigelasert oder sonst wie abgetragen. Anschließend wird auf die unmaskierten oder nicht-abgetragenen Teilbereiche der galvanisierfähigen Kunststoffoberfläche die Galvanik-Deckschicht 13 aufgebracht. Dies kann in mehreren Arbeitsschritten erfolgen. Sofern in Teilbereichen eine Lichtabschottung folgen oder durchleuchtete Teilbereiche gebildet werden sollen, wird das Dekor- und/oder Funktionsbauteil auch als Zwei-Komponenten- oder Mehr-Komponenten-Spritzgussteil hergestellt werden. Dabei ist jede beliebige zwei- oder dreidimensionale Form denkbar. Die galvanische Schicht 13 kann auf die Oberfläche des Dekor- und/oder Funktionsbauteiles ein-, mehr- oder allseitig aufgebracht sein.

Bei dem in den Fig. 3 bis 8 dargestellten folienhinterspritzten Kunststoffteilen ist eine vorderseitige und/oder eine rückseitige Folienhinterspritzung möglich, wobei das Abtragen der galvanisierfähigen Basisschicht oder das Aufbringen der galvanischen Schicht vorder- und/oder rückseitig erfolgen kann.

Zur Herstellung des hier dargestellten Dekor- und/oder Funktionsbauteiles kann auch auf Folien aus nicht-galvanisierbarem Material zurückgegriffen werden, wobei diese Folien in einem zusätzlichen Verfahren, beispielsweise durch Bedruckung oder durch Laminierung, oder durch Sprühen oder Tauschen, eine galvanisierfähige Kunststoffoberfläche erhalten. Dabei können zum Beispiel besondere Oberflächenstrukturen oder auch Logos realisiert werden. Die Freistellung der galvanisierfähigen Kunststoffoberfläche in den nicht zu galvanisierenden Bereichen kann zum Beispiel durch Lasern erfolgen. Durch den Aufdruck einer galvanisierfähigen Kunststoffoberfläche können auch Dekor- oder Funktionsflächen realisiert werden. Hierbei kann eine nicht-galvanisierfähige Folie zum Einsatz kommen. Demgegenüber kommt bei dem Einsatz von nicht-galvanisierfähigen Schichten eine galvanisierfähige Folie zum Einsatz, welche die galvanisierfähige Kunststoffoberfläche bildet. Bei diesem Vorgehen ist eine Laserung oder ein Abtragen nicht zwingend erforderlich.

Um bunt hinterlegte Symbolik herstellen zu können, kann zumindest eine galvanisierfähige und gegebenenfalls auch eingefärbte Materiallage aufgebracht werden, wobei auch die Realisierung von bunten und/oder auf einen Transmissionsgrad abgestimmten Werten möglich ist.

Nachstehend werden einzelne Ausführungsbeispiele eines Dekor- oder Funktionsbauteiles noch näher beschrieben:

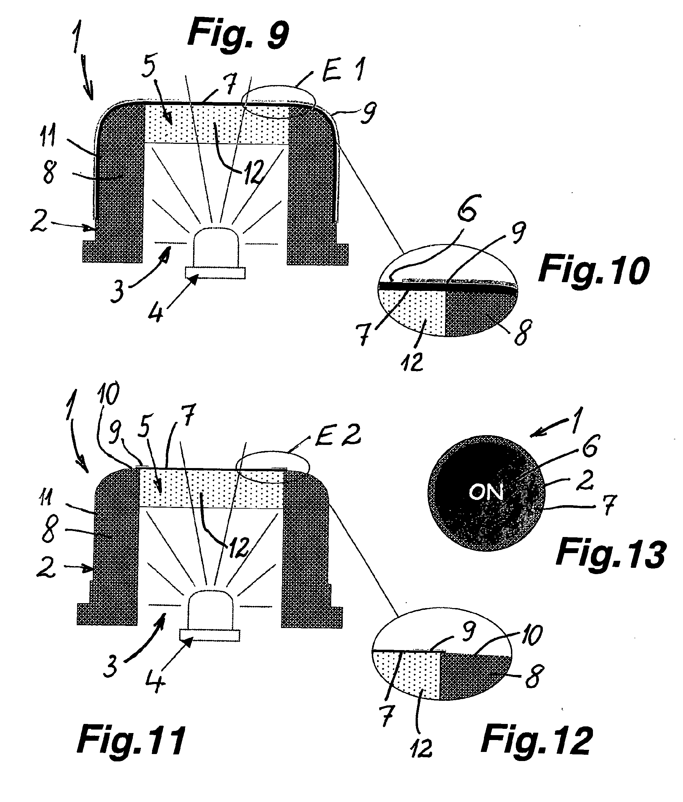

In Fig. 9 ist ein Dekor- und/oder Funktionsbauteil 1 dargestellt, dass ein Gehäuse 2 aufweist, in dessen Innenraum 3 eine Leuchtquelle 4 oder ein Leuchtmittel angeordnet sein kann.

Ist die Lichtquelle 4 eingeschaltet, hinter- oder durchleuchtet sie an einer im Ganzen 5 bezeichneten Abschlusswand vorgesehene Ziermuster, Symbole, Hinweise und/oder Schriftzeichen 6.

In beiden Ausführungsbeispielen erkennt man, dass die Abschlusswand 5 durch eine transparente, metallisierungsfähige oder nach Fertigstellung metallisierte Folie 7 gebildet ist und dass die Folie 7 von einem den Innenraum 3 mitbegrenzenden Gehäusekörper 8 getragen ist, der eine von der Folie 7 verschlossene Öffnung hat und im Randbereich der Öffnung mit der Folie 7 durch Spritzgießen verbunden ist. Gemäß Fig. 5 und auch gemäß Fig. 2 ist die Folie 7 zur Bildung des oder der Schriftzeichen 6 von einer bei ihrer Metallisierung gebildeten Metallschicht 9 befreit, wobei die verbleibende Metallschicht 9 die Schriftzeichen 6 im Ausführungsbeispiel in negativer Form ausspart. Die Metallschicht 9 ist also so entfernt, dass die Schriftzeichen 6 entstehen. Denkbar wäre auch umgekehrt eine Entfernung der Metallschicht 9 so, dass nur Schriftzeichen 6 oder sonstige Muster oder Symbole oder Hinweise metallisiert bestehen bleiben.

Der Gehäusekörper 8 ist dabei in beiden Ausführungsbeispielen hülsen- oder ringförmig ausgebildet und hat einen länglichen, vieleckigen oder runden, gemäß Fig. 5 kreisrunden Querschnitt, wobei die Form der von der Folie 7 überdeckten Öffnung mit dem Querschnitt des von dem Gehäusekörper 8 umschlossenen Innenraums 3 übereinstimmt. Dies erkennt man besonders gut in Fig. 3 bis 5.

Der von dem Gehäusekörper 8 umschlossene Innenraum 3 setzt sich dabei von dem die Leuchtquelle 4 aufweisenden Randbereich bis zu der Öffnung und zu der diese abschließenden Folie 7 vorsprungsfrei und stetig fort und behält dabei in den Ausführungsbeispielen auch einen gleichbleibenden Querschnitt, der sich bei einer Abwandlung aber auch stetig oder gegebenenfalls auch stufenartig verringern oder vergrößern könnte.

Fig. 11 bis 13 zeigt ein Ausführungsbeispiel, bei welchem die Folie 7 in dem von dem Rand 10 der Öffnung umgrenzten Bereich plan oder eben ist und den mit ihr durch Spritzen verbundenen Öffnungsrand 10 des Gehäusekörpers 8 an dessen gesamtem Umfang überdeckt, wobei die Folie nur wenig größer als der Innenquerschnitt des Innenraums 3 und der Öffnung ist.

Im Ausführungsbeispiel gemäß Fig. 9 und 10 ist die Folie 7 im Bereich ihres Randes gekrümmt und der durch Spritzgießen mit ihr verbundene Gehäusekörper 8 hat eine von der Folie 7 überdeckte abgeschrägte oder abgerundete Stirnseite, in welcher die von der Folie verschlossene Öffnung angeordnet ist. Zwar ist auch bei dem Ausführungsbeispiel nach Fig. 11 die Stirnseite des Gehäusekörpers 8 abgerundet, aber nicht von der metallisierten oder metallisierbaren Folie überdeckt.

In Fig. 9 ist dargestellt, dass die Folie 7 auch einen Teil der von der Stirnseite ausgehenden Seitenfläche 11 des Gehäusekörpers 8 überdecken und durch Spritzgießen damit verbunden sein kann, um eine besonders feste und dauerhafte Verbindung der Folie mit dem Gehäusekörper 8 zu erzielen, oder eine zusätzliche seitliche Dekoration zu realisieren.

Im Inneren des Gehäusekörpers 8 erkennt man in beiden Ausführungsbeispielen an der Innen- oder Unterseite der Folie 7 eine lichtdurchlässige Stützwandung 12 aus spritzfähigem Werkstoff, die mit der Innen- oder Unterseite der Folie 7 ebenfalls durch Spritzgießen verbunden ist, wobei die Dicke dieser transparenten oder beliebig eingefärbten Stützwand 12 etwa der Querschnittsdicke der Wandung des Gehäusekörpers 8 entspricht. Auf diese Weise entsteht ein sehr kompaktes und widerstandsfähiges Element 1, welches dennoch sehr einfach durch Spritzgießen herstellt werden kann, wobei bei dem Spritzgießverfahren gleichzeitig die Verbindung mit der Folie 7 erfolgt.

Die Folie kann dabei vor dem Verbinden mit dem Gehäusekörper 8 vorverformt, beispielsweise druckgeformt, vakuumgeformt oder tiefgezogen sein, um die gemäß Fig. 1 erforderliche dreidimensionale Form schon vor ihrem Einlegen in eine Spritzgießform und vor dem Einspritzen des Werkstoffs des Gehäusekörpers 8 zu haben. Sie kann aber für die Ausführungsform nach Fig. 11 auch plan gelassen sein. In beiden Fällen wird sie vor dem Einlegen in die Spritzgießform, in welcher sie mit dem Gehäusekörper 8 und der Stützwand 12 durch Spritzgießen verbunden wird, ausgestanzt.

Als Werkstoff für die metallisierte oder metallisierbare Folie 7 kann ABS vorgesehen werden und die Dicke der Wandung des Gehäusekörpers 8 und/oder der Stützwand 12 kann die Dicke der Folie 7 ganz erheblich und mehrfach übertreffen, wie es in den Figuren angedeutet ist. Dabei kann aufgrund der Verbindung der Folie mit spritzgießfähigem Werkstoff deren Dicke noch geringer sein, als es den Proportionen in der Zeichnung entspricht, dass heißt der besseren Deutlichkeit wegen ist die Folie 7 und auch die Metallschicht 9 in den Zeichnungen überdimensioniert dargestellt.

In den Figuren ist noch angedeutet, dass als Werkstoff für den Gehäusekörper 8 spritzgießfähiger aber undurchsichtiger Kunststoff vorgesehen ist, da der Gehäusekörper 8 nicht durchleuchtet werden soll. Günstig ist es dabei, wenn dieser Werkstoff des Gehäusekörpers 8 nicht metallisierbar ist, so dass das Element 1 nach dem Spritzgießen zum Beispiel in einem Galvanisierungsprozess metallisiert werden kann, wobei dann nur die metallisierbare Folie 7 die Metallschicht 9 annimmt, die dann von den Symbolen oder Mustern oder Schriftzeichen 6 oder dergleichen wieder stellenweise befreit wird. Prinzipiell ist zu vermerken, dass bei der partiellen Galvanisierung eine metallisierbare Folie und ein Spritzgussgranulat zum Einsatz kommen können, wobei der Prozess der Basisbeschichtung dabei so ausgelegt werden muss, dass nur zum Beispiel die Folie die Basisschicht (zum Beispiel aus Nickel) annimmt, und somit eine Galvanisierung zulässt.

Als Werkstoff für die Stützwand 12 ist ein spritzgießfähiger, transparenter, durchsichtiger und/oder eventuell auch eingefärbter, gegebenenfalls ebenfalls nicht metallisierbarer Kunststoff vorgesehen, so dass das Licht der Leuchtquelle 4 durch die Stützwand 12 und an den vorgesehenen Stellen durch die Folie 7 hindurchdringen kann.

Zweckmäßigerweise wird die Folie 7 in ihre spätere Form geformt, sei es dass sie druckgeformt, vakuumgeformt oder tiefgezogen oder auch plangelassen und dann ausgestanzt wird. Danach wird sie in eine Spritzgießform eingelegt und mit dem Werkstoff des Gehäusekörpers 8 hinterspritzt und dadurch mit dem Gehäusekörper 8 verbunden, wobei außerdem auch die Stützwand 12 oder andere Segmente, zum Beispiel Schraubdome oder Rasthaken, durch Spritzgießen angefertigt und mit der Innen- oder Unterseite der Folie 7 gleichzeitig bei dieser Herstellung verbunden werden kann.

Nach dem Entformen und der Aufbringung der Basisschicht kann das so gebildete Element 1 in einem Galvanisierungsprozess metallisiert werden, wobei nur die Folie 7 an ihrer Oberfläche die Metallschicht 9 annimmt, so dass durch Befreien der Folie 7 in Teilbereichen beispielsweise durch Verdampfen der Basisschicht zum Beispiel aufgrund eines Laserverfahrens Schriftzeichen 6 oder andere Symbole oder Muster oder Zierelemente gebildet werden können.

## Patentansprüche

1. Dekor- und/oder Funktionsbauteil (1), das zumindest bereichsweise eine Kunststoffoberfläche aufweist, welche mit einer galvanisierfähigen Basisschicht versehen werden kann, um darauf wiederum eine galvanische Schicht beziehungsweise Schichten aufzubauen, wobei die galvanisierfähige Basisschicht in Teilbereichen abgetragen werden kann oder durch eine Maskierung (14), welche gegebenenfalls eingefärbt sein kann, an ihrem Aufbau gehindert wird, wobei die nicht-abgetragenen und/oder unmaskierten Teilbereiche letztendlich eine galvanische Schicht (13) tragen.

2. Bauteil nach Anspruch 1, **dadurch gekennzeichnet, dass** die Maskierung (14) auf die Basisschicht aufgebracht wird.

3. Bauteil nach Anspruch 1 oder 2, **dadurch gekennzeichnet, dass** das Dekor- oder Funktionsbauteil (1) als folienhinterspritztes oder foliertes Kunststoffteil ausgebildet ist.

4. Bauteil nach einem der Ansprüche 1 bis 3, **dadurch gekennzeichnet, dass** das Dekor- oder Funktionsbauteil (1) aus einem galvanisierfähigen Trägermaterial (17) hergestellt ist, das zumindest teil- oder bereichsweise eine als Maskierung (14) aufgebrachte nicht-galvanisierbare Schicht und eine von der nicht-galvanisierbaren Schicht wenigstens bereichsweise umgrenzte galvanische Schicht (13) trägt.

5. Bauteil nach einem der Ansprüche 1 bis 4, **dadurch gekennzeichnet, daß** das Dekor- oder Funktionsbauteil (1) aus einem nicht-galvanisierfähigen Trägermaterial hergestellt ist, auf das zumindest teil- oder bereichsweise eine galvanisierfähige Schicht aufgebracht ist, welche galvanisierfähige Schicht zumindest teil- oder bereichsweise eine als Maskierung aufgebrachte nicht-galvanisierbare Schicht (14) und eine von der nicht-galvanisierbaren Schicht (14) wenigstens bereichsweise umgrenzte galvanische Schicht (13) trägt.

6. Bauteil nach einem der Ansprüche 1 bis 5, **dadurch gekennzeichnet, dass** das Trägermaterial aus einer Folie hergestellt ist.

7. Bauteil nach einem der Ansprüche 1 bis 6, **dadurch gekennzeichnet, dass** die Maskierung (14) auf das Trägermaterial im Siebdruckverfahren aufgebracht ist.

8. Bauteil nach einem der Ansprüche 1 bis 7, **dadurch gekennzeichnet, dass** das als folienhinterspritztes Kunststoffteil ausgebildete Dekor- und/oder Funktionsbauteil (1) eine hinterspritzte Folie aus einem galvanisierfähigen Kunststoff aufweist.

9. Bauteil nach einem der Ansprüche 1 bis 8, **dadurch gekennzeichnet, dass** der hinterspritzte Kunststoff ein galvanisierbarer oder nicht-galvanisierfähiger Kunststoff ist, wobei sich die Basisschicht (zum Beispiel Nickel) durch entsprechende Parametereinstellung nicht darauf abgelegt ist.

10. Bauteil nach einem der Ansprüche 1 bis 9, **dadurch gekennzeichnet, dass** unter der außenseitigen galvanischen Schicht (13) eine galvanische Basisschicht auf das Dekor- und/oder Funktionsbauteil (1) aufgebracht ist.

11. Bauteil nach einem der Ansprüche 1 bis 10, **dadurch gekennzeichnet, dass** die hinterspritzte Kunststofffolie und/oder die galvanische Basisschicht in Teilbereichen abgetragen ist.

12. Bauteil nach einem der Ansprüche 1 bis 11, **dadurch gekennzeichnet, dass** das Dekor- und/oder Funktionsbauteil (1) zumindest in einem Teilbereich und insbesondere in einem an die galvanische Schicht angrenzenden Bereich transparent oder opak ausgebildet ist.

13. Bauteil nach einem der Ansprüche 1 bis 12, **dadurch gekennzeichnet, dass** dem Dekor- und/oder Funktionsbauteil (1) eine Hintergrundbeleuchtung zugeordnet ist.

14. Bauteil nach einem der Ansprüche 1 bis 13, **dadurch gekennzeichnet, dass** die galvanische Schicht (13) als Ziermuster, Symbol, Hinweis, Schriftzeichen oder dergleichen ausgebildet ist oder in negativer Form ausspart.

15. Bauteil nach einem der Ansprüche 1 bis 14, **dadurch gekennzeichnet, dass** das Dekor- oder Funktionsbauteil (1) ein Gehäuse mit einem Innenraum hat, das an einer Abschlusswand des Gehäuses eine galvanische Schicht vorgesehen ist, dass die Abschlusswand wenigstens teil- oder bereichsweise durch eine Folie mit einer zumindest bereichsweise galvanisierfähigen Oberfläche gebildet ist, welche zumindest in einem Teilbereich die galvanische Schicht trägt und dass die Folie zur Bildung des zumindest einen Ziermusters, Symboles, Hinweises, Schriftzeichens, oder dergleichen von der galvanischen Schicht derart befreit ist, dass der die galvanische Schicht umgrenzende Bereich des Dekor- oder Funktionsbauteiles das zumindest eine Ziermuster, Symbol, Hinweis, Schriftzeichen, oder dergleichen bildet oder in negativer Form ausspart.

16. Bauteil nach einem der Ansprüche 1 bis 15, **dadurch gekennzeichnet, dass** der Gehäusekörper nach seinem Herstellen und Verbinden mit der Folie durch Spritzgießen ausgebildet ist.

17. Bauteil nach einem der Ansprüche 1 bis 16, **dadurch gekennzeichnet, dass** die Folie im Bereich ihres Randes gekrümmt und der durch Spritzgießen mit ihr verbundene Gehäusekörper eine von der Folie überdeckte abgeschrägte oder abgerundete Stirnseite hat.

18. Bauteil nach einem der Ansprüche 1 bis 17, **dadurch gekennzeichnet, dass** die Folie einen Teil der von der Seiten- oder Stirnseite abgehenden Seitenfläche des Gehäusekörpers überdeckt und durch Spritzgießen damit verbunden ist.

19. Bauteil nach einem der Ansprüche 1 bis 18, **dadurch gekennzeichnet, dass** im Inneren des Gehäusekörpers an der Innen- oder Unterseiten der Folie eine lichtdurchlässige Stützwandung aus spritzfähigem Werkstoff vorgesehen ist, die mit der Innen- oder Unterseite der Folie durch Spritzgießen verbunden ist.

20. Bauteil nach einem der Ansprüche 1 bis 19, **dadurch gekennzeichnet, dass** die Folie vor dem Verbinden mit dem Gehäusekörper vorverformt, beispielsweise druckverformt, vakuumverformt oder tiefgezogen oder planbelassen und insbesondere ausgestanzt ist.

21. Bauteil nach einem der Ansprüche 1 bis 20, **dadurch gekennzeichnet, dass** für die Folie eine elektrisch leitende und/oder galvanisierfähige Folie vorgesehen ist.

22. Bauteil nach einem der Ansprüche 1 bis 21, **dadurch gekennzeichnet, dass** als Werkstoff für den Gehäusekörper und gegebenenfalls auch dessen Stützwandung ein spritzgießfähiger Kunststoff vorgesehen ist.

23. Bauteil nach einem der Ansprüche 1 bis 22, **dadurch gekennzeichnet, dass** die Seitenwand beziehungsweise das Granulat (8) metallisierfähig ist, so dass ein Zwei- oder Mehrkomponenten-Teil entsteht, welches an den Flanken und auf der Innenseite metallisiert ist, zur Verbesserung der Lichtreflektion und Lichtleitung im Inneren des Bauteiles.
